# EUROPÄISCHE PATENTANMELDUNG

(11) **EP 2 325 526 A1**
(43) Veröffentlichungstag der Anmeldung: **25.05.2011**
(21) Anmeldenummer: 10014359.3
(22) Anmeldetag: 06.11.2010
(51) Int. Cl.: F16H 55/34

(54) **Laufrad**

(30) Priorität: 19.11.2009 AT 18352009
(71) Anmelder: Faigle Kunststoffe Gesellschaft m.b.H., 6971 Hard (AT)
(72) Erfinder: Schromm, Michael, 6900 Bregenz (AT); Decker, Thomas, 6923 Lauterach (AT)
(74) Vertreter: Fechner, Thomas

(57) **Zusammenfassung**

Laufrad (1) mit einem, um eine Rotationsachse (2) des Laufrades drehbaren Tragkörper (3) und einem, auf dem Tragkörper (3) angeordneten und gemeinsam mit dem Tragkörper (3) um die Rotationsachse (2) drehbaren Reibbelag (4), welcher zumindest bereichsweise von einer, zur reibschlüssigen Anlage an einem anderen Körper vorgesehenen, Reiboberfläche (5) begrenzt ist, wobei die Reiboberfläche (5), in axialer Richtung (6) parallel zur Rotationsachse (2) gesehen, zumindest zwei Randbereiche (7) und zumindest einen, zwischen den Randbereichen (7) angeordneten, zentralen Bereich (8) aufweist, wobei der Abstand (9, 9') zwischen Reiboberfläche (5) und Rotationsachse (2) im zentralen Bereich (8) geringer ist als in den Randbereichen (7). (Fig. 1)

## Beschreibung

Die vorliegende Erfindung betrifft ein Laufrad mit einem, um eine Rotationsachse des Laufrades drehbaren Tragkörper und einem, auf dem Tragkörper angeordneten und gemeinsam mit dem Tragkörper um die Rotationsachse drehbaren Reibbelag, welcher zumindest bereichsweise von einer, zur reibschlüssigen Anlage an einem anderen Körper vorgesehenen, Reiboberfläche begrenzt ist.

Gattungsgemäße Laufräder werden als Übertragungsglieder z.B. im Automobilbau eingesetzt. Sie liegen reibschlüssig an einem anderen Körper, meist an einem anderen Rad an. Über den Reibschluss werden die Bewegungen bzw. Rotationsbewegungen von dem anderen Rad bzw. Körper auf das Laufrad oder in die andere Richtung übertragen. Beim Stand der Technik werden als Laufräder meist Räder mit einem Tragkörper aus Stahl verwendet, wobei auf den Tragkörper ein Reibbelag aus Gummi aufvulkanisiert ist. Die Tragkörper aus Stahl haben zwar den Vorteil, Wärme relativ gut abzutransportieren, sie sind aber relativ schwer und verursachen vergleichsweise hohe Materialkosten.

Um diese Nachteile der Tragkörper aus Stahl zu vermeiden, wurden Versuche durchgeführt, ob auch Laufräder mit Tragkörpern aus anderem Material, vor allem aus vergleichsweise günstigem Kunststoff hergestellt werden können und voll funktionstüchtig sind. Dabei hat sich herausgestellt, dass es durch die schlechtere Wärmeleitfähigkeit von Kunststofftragkörpern zu einem Hitzestau bei entsprechenden Belastungen in gewissen Bereichen des Laufrades kommt, was zum Aufweichen und zur Zerstörung des Reibbelages führen kann, womit solche Laufräder nicht die Anforderungen erfüllen.

Aufgabe der vorliegenden Erfindung ist es daher, für gattungsgemäße Laufräder eine konstruktive Verbesserung vorzuschlagen, welche die bisher beobachteten thermischen Probleme beseitigt oder zumindest ausreichend stark minimiert.

Zur Lösung dieser Aufgabe wird gemäß der vorliegenden Erfindung vorgeschlagen, dass die Reiboberfläche, in axialer Richtung parallel zur Rotationsachse gesehen, zumindest zwei Randbereiche und zumindest einen, zwischen den Randbereichen angeordneten, zentralen Bereich aufweist, wobei der Abstand zwischen Reiboberfläche und Rotationsachse im zentralen Bereich geringer ist als in den Randbereichen.

Gemäß der Erfindung ist somit vorgesehen, dass die Reiboberfläche nicht eben, sondern im zentralen Bereich gegenüber den Randbereichen etwas abgesenkt ist. Es ergibt sich dadurch vorzugsweise eine konkave Form der Reiboberfläche. Dies hat zur Folge, dass die Andruckkräfte zwischen dem Reibbelag und dem Körper, an dem das Laufrad reibschlüssig anliegt, in den Randbereichen höher sind, als im zentralen Bereich. Dies hat zur Folge, dass in den Randbereichen beim Abrollen des Laufrades mehr Wärme entsteht als im zentralen Bereich. Dies verhindert thermische Probleme, da die Randbereiche von der Umgebungsluft deutlich besser gekühlt werden und es im zentralen Bereich nicht oder nur im verträglichen Ausmaß zur Wärmeentwicklung kommen kann. Ein Wärmestau, welcher zur Beeinträchtigung oder Zerstörung des Reibbelags im zentralen Bereich führen könnte, ist jedenfalls verhindert.

Günstigerweise ist die Härte der Reiboberfläche bzw. des Reibbelages und die Abstandsdifferenz zwischen Abstand im zentralen Bereich und Abstand in den Randbereichen so gewählt, dass die Reiboberfläche auch im zentralen Bereich reibschlüssig an dem anderen Körper bzw. Rad anliegt, aber eben in diesem zentralen Bereich mit geringeren Kräften an diesen Körper bzw. dieses Rad angedrückt wird.

Der Erfindung liegt somit die Überlegung zugrunde, dass Spannungen, Walkarbeit und somit die Wärmeentwicklung, die durch das Abrollen entsteht, in die Randbereiche der Reiboberfläche verschoben wird, wo sie durch bessere Umströmung mit der Umgebungsluft besser abgeführt werden kann als im zentralen Bereich des Reibbelages bzw. der Reiboberfläche, in dem die Wärme isoliert ist und sich aufstaut. Die ungleichmäßige Spannungsverteilung über die Ausdehnung der Reiboberfläche in axialer Richtung parallel zur Rotationsachse wird zugunsten einer günstigeren Wärmeverteilung während des Schnelllaufs des Laufrades in Kauf genommen. Wärmespitzen in der Mitte der Reiboberfläche bzw. des Reibbelages können dadurch vermieden werden.

Vorzugsweise ist vorgesehen, dass die Reiboberfläche genau zwei außen liegende Randbereiche und genau einen dazwischen liegenden zentralen Bereich aufweist. Der Übergang vom zentralen Bereich zu den Randbereichen der Reiboberfläche kann stetig, also ohne Stufen oder Absätze verlaufen. Es ist aber auch denkbar, zwischen dem zentralen Bereich und den Randbereichen zumindest einen stufenförmigen und/oder kantenartigen Übergang zu realisieren.

Um den erfindungsgemäßen Effekt zu erreichen, ist es nicht notwendig, dass die Abstandsdifferenz sonderlich groß ist. In bevorzugten Ausgestaltungsformen ist vielmehr vorgesehen, dass der Abstand zwischen Reiboberfläche und Rotationsachse im zentralen Bereich um eine Abstandsdifferenz von 0,1 mm bis 0,6mm, vorzugsweise von 0,2mm bis 0,4mm, geringer ist als in den Randbereichen. Insbesondere bei solchen Abstandsdifferenzen ist es günstig, wenn der Reibbelag zumindest an seiner Reiboberfläche, vorzugsweise der gesamte Reibbelag, eine Härte im Bereich von 90 Shore A bis 64 Shore D, vorzugsweise im Bereich von 50 Shore D bis 60 Shore D, aufweist. In einem konkreten Ausführungsbeispiel wurde ein Reibbelag bzw. eine Reiboberfläche mit einer Härte von 54 Shore D gewählt.

Bevorzugt wird die Erfindung vor allem bei Laufrädern eingesetzt, bei denen der Tragkörper, vorzugsweise faserverstärkten, Kunststoff aufweist oder aus, vorzugsweise faserverstärktem, Kunststoff besteht. Alternativ dazu kann bei erfindungsgemäßen Laufrädern aber auch vorgesehen sein, dass der Tragkörper aus Metall, insbesondere aus Stahl, besteht oder zumindest solche Materialien aufweist. In der Kunststoffausführung des Tragkörpers sieht ein besonders bevorzugtes Ausführungsbeispiel vor, dass der Tragkörper, vorzugsweise faserverstärktes, Polyamid aufweist oder aus, vorzugsweise faserverstärktem, Polyamid besteht.

Auch wenn es grundsätzlich denkbar wäre, Reibbelag und Tragkörper aus demselben Material auszugestalten, so sehen bevorzugte Ausgestaltungsformen doch vor, dass Tragkörper und Reibbelag aus verschieden harten Materialien ausgebildet sind. Insbesondere ist es dabei günstig, wenn die Reiboberfläche, vorzugsweise der gesamte Reibbelag, aus einem weicheren Material besteht als der Tragkörper. Dabei kann der Reibbelag ebenfalls aus Kunststoff, vorzugsweise aus thermoplastischem Polyurethan, bestehen oder solches Material aufweisen. Ein alternatives Material für den Reibbelag ist Kautschuk.

Weitere Einzelheiten und Merkmale bevorzugter Ausgestaltungsformen der Erfindung ergeben sich aus der Figurenbeschreibung. Es zeigen:
- Fig. 1: einen Schnitt in einer durch die Rotationsachse verlaufenden Ebene durch ein erstes Ausführungsbeispiel eines erfindungsgemäßen Laufrades;

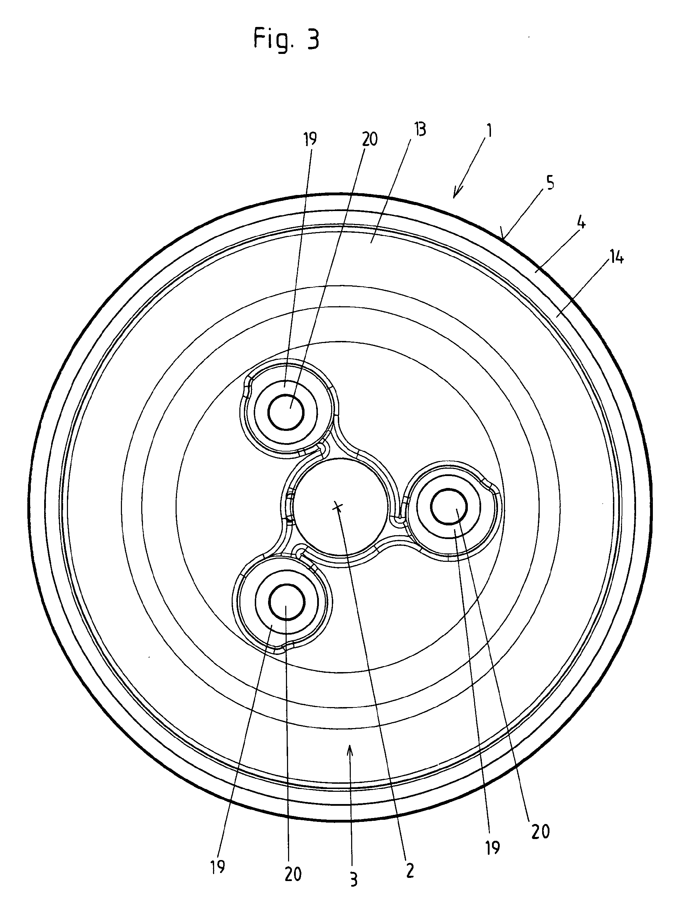

- Fig. 2 und 3: Seitenansichten des Laufrades gemäß Fig. 1;
- Fig. 4: eine vergrößerte Detaildarstellung des Laufrades aus Fig. 1 im Bereich von Reibbelag und Ringteil;
- Fig. 5: schematisch eine Möglichkeit der Verbindung des Laufrades aus Fig. 1 mit einer An- oder Abtriebswelle;
- Fig. 6: schematisch ein Verwendungsbeispiel für ein erfindungsgemäßes Laufrad und
- Fig. 7 und 8: Beispiele von Alternativen zur Ausgestaltung der Reiboberfläche.

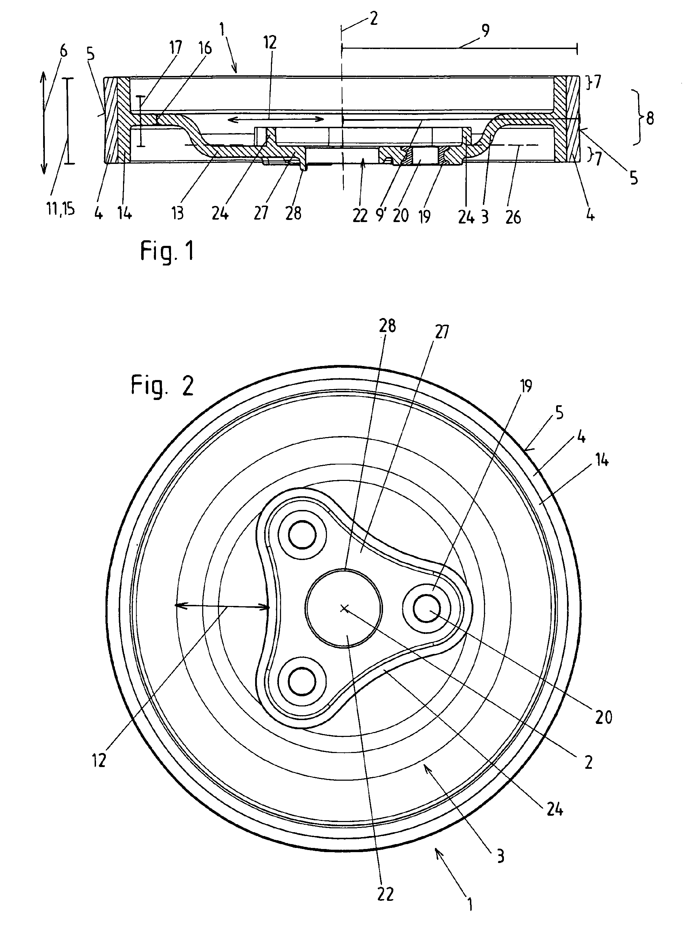

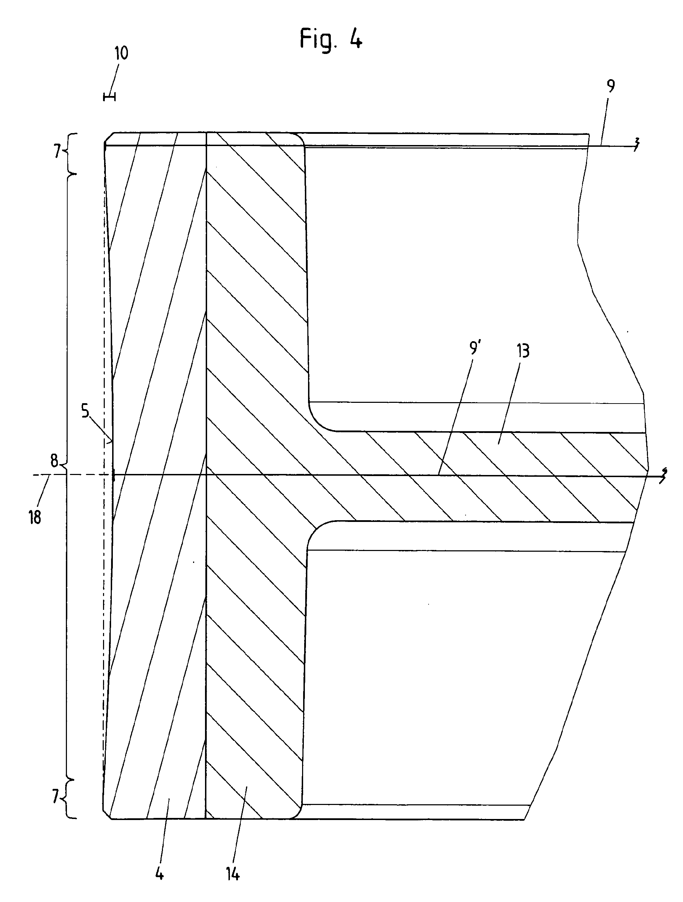

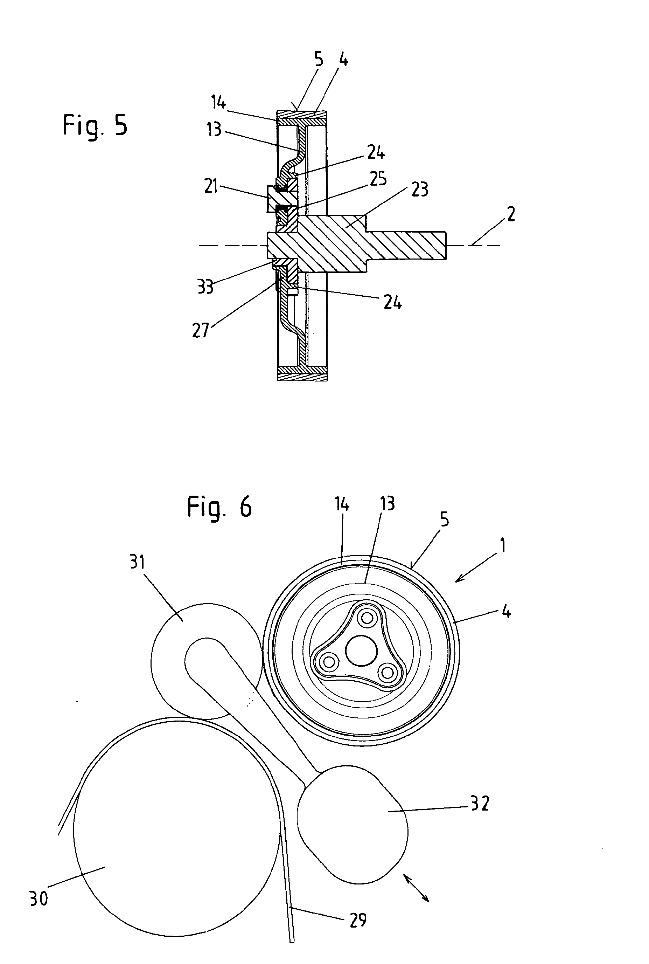

Das in Fig. 1 in einer Schnittdarstellung gezeigte Laufrad 1 ist im Betrieb um seine Rotationsachse 2 drehbar gelagert. Hierzu kann, wie weiter unten anhand von Fig. 5 noch im Detail erläutert, eine Welle 23 durch die zentrale Öffnung 22 im Laufrad 1 hindurchgesteckt und entsprechend am Laufrad 1 befestigt werden. Das dargestellte Laufrad 1 weist einen Tragkörper 3 auf, welcher im gezeigten ersten Ausführungsbeispiel aus Kunststoff oder faserverstärktem Kunststoff ausgeführt ist. In radialer Richtung 12 und von der Rotationsachse 2 aus gesehen außen am Tragkörper 3 ist der Reibbelag 4 befestigt. Dieser weist die Reiboberfläche 5 auf, welche zur reibschlüssigen Anlage an einem anderen Körper, wie z.B. dem in Fig. 6 gezeigten Übertragungsrad 31, vorgesehen ist. Die Reiboberfläche 5 des Laufrades 1 gemäß Fig. 1 weist, in axialer Richtung 6 parallel zur Rotationsachse gesehen, zwei Randbereiche 7 und einen zwischen den Randbereichen 7 angeordneten zentralen Bereich 8 auf, wobei der Abstand 9' zwischen Reiboberfläche 5 und Rotationsachse 2 im zentralen Bereich 8 geringer ist, als der Abstand 9 zwischen Reiboberfläche 5 und Rotationsachse 2 in den Randbereichen 7. Im ersten Ausführungsbeispiel ist, wie besonders in der Vergrößerung in Fig. 4 zu sehen, der Übergang vom zentralen Bereich 8 zu den Randbereichen 7 hin, stetig. Es ergibt sich dadurch eine konkav ausgebildete Reiboberfläche 5. Wie im gezeigten ersten Ausführungsbeispiel realisiert, ist es dabei günstig, wenn die, vorzugsweise gesamte, Reiboberfläche 5, in radialer Richtung 12 von der Rotationsachse 2 aus gesehen, nach außen und vom Tragkörper 3 weg weist. Weiters ist bevorzugt vorgesehen, dass der zentrale Bereich 8, in axialer Richtung 6 parallel zur Rotationsachse 2 gesehen, sich über zumindest 20%, vorzugsweise über zumindest 50%, der Gesamterstreckung 11 der Reiboberfläche 5 erstreckt. Im ersten Ausführungsbeispiel ist, wie in Fig. 4 zu sehen, sogar vorgesehen, dass der zentrale Bereich 8 sich, in axialer Richtung 6 parallel zur Rotationsachse 2 gesehen, über zumindest 70%, vorzugsweise über zumindest 80%, der Gesamterstreckung 11 der Reiboberfläche 5 erstreckt. Der Reibbelag 4 kann formschlüssig und/oder kraftschlüssig (reibschlüssig) und/oder stoffschlüssig mit dem Tragkörper 3 bzw. seinem Ringteil 14 verbunden sein. Eine stoffschlüssige Verbindung mit dem Tragkörper 3 bzw. seinem Ringteil 14 ist jedoch bevorzugt. In einer vorteilhaften Ausbildung ist der Reibbelag 4 an den Ringteil 14 bzw. Tragkörper 3 angespritzt.

Im gezeigten ersten Ausführungsbeispiel weist der Tragkörper 3 einen Scheibenteil 13 und einen hier zylinderförmig ausgeführten Ringteil 14 auf. Der Reibbelag 4 ist in radialer Richtung 12 von der Rotationsachse 2 aus gesehen, außen auf dem Ringteil 14 angeordnet. Der Scheibenteil 13 befindet sich in radialer Richtung 12 von der Rotationsachse 2 aus gesehen, innen in einem vom Ringteil 14 umfassten Raum. Günstigerweise ist dabei, wie in dem ersten Ausführungsbeispiel auch realisiert, vorgesehen, dass der Scheibenteil 13 und der Ringteil 14 einstückig miteinander verbunden sind. Der Scheibenteil 13 und der Ringteil 14 können z.B. als gemeinsam gespritzter Kunststoffteil ausgeführt sein. Natürlich sind auch andere Ausgestaltungsformen denkbar, bei denen der Scheibenteil 13 auf andere Art und Weise am Ringteil 14 befestigt ist. Z.B. ist auch ein Anschrauben, Annieten, Ankleben oder Verschweißen der beiden Teile denkbar.

Der Begriff des Scheibenteils 13 ist allgemein aufzufassen. Es muss sich nicht zwingend um eine ebene Scheibe handeln. Der Scheibenteil 13 muss auch nicht eine geschlossene Fläche darstellen. Er kann auch zumindest bereichsweise rippen- oder speichenartig ausgeführt sein.

Wie auch in dem gezeigten ersten Ausführungsbeispiel realisiert, weist der Scheibenteil 13 günstigerweise einen Anschlussbereich 27 auf, welcher der Befestigung des Laufrades 1 an einer Welle 23 dient. Dieser Anschlussbereich 27 kann von dem Bereich, in dem der Scheibenteil 13 am Ringteil 14 befestigt bzw. angeordnet ist, in axialer Richtung 6 beabstandet sein. Im ersten Ausführungsbeispiel ist, wie insbesondere in Fig. 1 und 5 zu sehen, dies auch so realisiert und mittels der Ebene 26 noch einmal veranschaulicht. Im gezeigten ersten Ausführungsbeispiel ergibt sich hieraus im Querschnitt gemäß Fig. 1 eine annähernd schüsselartige Ausbildung des Scheibenteils 13.

Bei dem dargestellten ersten Ausführungsbeispiel ist wie auch in anderen bevorzugten Ausgestaltungsformen vorgesehen, dass, in axialer Richtung 6 parallel zur Rotationsachse 2 gesehen, die Gesamterstreckung 15 des Ringteils 14 größer ist, als die in axialer Richtung 6 parallel zur Rotationsachse 2 gemessene Dicke 16 des Scheibenteils 13 im Bereich der Verbindung des Scheibenteils 13 mit dem Ringteil 14. Günstigerweise ist die Gesamterstreckung 15 des Ringteils 14 in axialer Richtung 6 zumindest um das Doppelte oder zumindest um das 5-fache größer als die Dicke 16. Die Gesamterstreckung 15 des Ringteils 14 entspricht im gezeigten ersten Ausführungsbeispiel der Gesamterstreckung 11 der Reiboberfläche 5, jeweils in axialer Richtung 6 parallel zur Rotationsachse 2. Dies muss aber nicht zwingend so sein. Die Gesamterstreckungen 11 und 15 können auch unterschiedlich groß sein. Die Gesamterstreckung 11 der Reiboberfläche 5 bzw. auch die Gesamterstreckung 15 des Ringteils 4 in axialer Richtung 6 können bei bevorzugten Ausgestaltungsformen zwischen 15 und 35 mm, vorzugsweise zwischen 20 und 25 mm, betragen.

Im Sinne einer möglichst symmetrischen Abstützung des Reibbelages 4 und damit im Sinne einer symmetrischen Spannungsverteilung über die Gesamterstreckung 11 der Reiboberfläche 5 in axialer Richtung 6 ist günstigerweise vorgesehen, wenn der Scheibenteil, in axialer Richtung 6 parallel zur Rotationsachse 2 gesehen, in einem Zentralabschnitt 17 des Ringteils 14 mit dem Ringteil 14 verbunden ist, wobei der Zentralabschnitt 17 sich, in axialer Richtung 6 parallel zur Rotationsachse 2 gesehen, über bis zu 60%, vorzugsweise über bis zu 30%, der Gesamterstreckung 15 des Ringteils 14, in axialer Richtung 6 parallel zur Rotationsachse 2 gesehen, erstreckt. Der Zentralabschnitt 17 ist in Fig. 1 dargestellt. Wie dort zu sehen, ist der Zentralabschnitt 17, in axialer Richtung 6 gesehen, länger als die Dicke 16 des Scheibenteils 13 im Bereich der Verbindung mit dem Ringteil 14 eingezeichnet. Dies soll verdeutlichen, dass nicht immer, wie im gezeigten ersten Ausführungsbeispiel realisiert, der Bereich der Verbindung des Scheibenteils 13 mit dem Ringteil 14 in axialer Richtung 6 gesehen, mittig bezüglich der Gesamterstreckung 15 des Ringteils 14 gewählt werden muss. Auch eine außermittige Verbindung zwischen Scheibenteil 13 und Ringteil 14 kann vorgesehen sein. Der Zentralabschnitt 17, in dem diese Verbindung angeordnet ist, sollte sich aber wie gesagt günstigerweise über maximal bis zu 60%, vorzugsweise über maximal bis zu 30%, der Gesamterstreckung 15 des Ringteils 14 in axialer Richtung 6 erstrecken.

Im ersten Ausführungsbeispiel ist, wie in Fig. 4 zu sehen, die Reiboberfläche 5 achsensymmetrisch bezüglich einer orthogonal auf die Rotationsachse 2 stehenden Symmetrieachse 18 ausgebildet. Es sind aber auch in axialer Richtung 6 gesehen, unsymmetrische Ausgestaltungsformen der Reiboberfläche 5 denkbar. Dies kann z.B. insbesondere dann günstig sein, wenn die Verbindung von Ringteil 14 und Scheibenteil 13 in axialer Richtung 6 gesehen nicht in der Mitte, also außermittig, bezüglich der Gesamterstreckung 15 des Ringteils 14 erfolgt ist.

Wie insbesondere in Fig. 5 zu sehen, erfolgt die Verbindung des Verbindungsflansches 25 der Welle 23 mit dem Laufrad 1 in dem zentralen Anschlussbereich 27 des Scheibenteils 13. In diesem weist der Scheibenteil 13 Durchtrittsöffnungen auf, in die ringförmige Einsatzteile 19, vorzugsweise aus Metall eingesetzt sind. Die Einsatzteile 19 weisen im gezeigten ersten Ausführungsbeispiel die Schrauböffnung 20 zum Durchtritt von Verbindungsschrauben 21 auf. Weiters besitzt der Scheibenteil 13 bei der dargestellten Variante eine zentrale Öffnung 22, durch die die Welle 23 hindurchgeführt werden kann. Der Anschlussbereich 27 ist von einem axial vorspringenden Bundsteg 24 begrenzt, der vom Scheibenteil 13 ausgeht. Vorzugsweise weist der Bundsteg 24 bezogen auf seinen Verlauf um die Rotationsachse 2 eine von der Kreisform abweichende Form auf, beispielsweise indem er an einer oder mehreren Stellen, im gezeigten ersten Ausführungsbeispiel an drei Stellen, radial nach außen ausgebuchtet ist. Dies ist besonders gut in der Seitenansicht gemäß Fig. 2 zu sehen. Der Bundsteg 24 bildet im ersten Ausführungsbeispiel eine Positionierhilfe bei der Montage des Laufrades 1 an der Welle 23 bzw. einem Verbindungsflansch 25 der Welle 23. Auch die Stabilität des Scheibenteils 13 wird durch den Bundsteg 24 erhöht. Die Ebene 26 des Anschlussbereiches 27 liegt im ersten Ausführungsbeispiel bei einem der Enden der axialen Gesamterstreckung 15 des Ringteils 14. Wie bereits ausgeführt, ist aber auch eine weniger stark ausgeprägte außermittige Lage der Ebene 26 bezogen auf die axiale Gesamterstreckung 15 des Ringteils 14, insbesondere aber auch eine mittige Lage der Ebene 26 bezogen auf die axiale Gesamterstreckung 15 denkbar.

Die Verbindung des Laufrades 1 mit der Welle 23 über den Verbindungsflansch 25 ist wie bereits erwähnt in Fig. 5 dargestellt. Der Verbindungsflansch 25 wird in den vom Bundsteg 24 umgebenen Bereich eingesetzt und mittels Verbindungsschrauben 21 mit dem Tragkörper 3 verbunden. Im ersten Ausführungsbeispiel erfolgt dies über die in den Tragkörper 3 eingesetzten und starr mit diesem verbundenen Einsatzteile 19. Ein Fortsatz 33 des Verbindungsflansches 25 ragt hierbei durch die zentrale Öffnung 22 des Anschlussbereiches 27. Die Verbindung des Verbindungsflansches 25 mit der Welle 23 kann in unterschiedlicher Art und Weise erfolgen, beispielsweise stoffschlüssig. Auch eine einstückige Ausbildung ist denkbar und möglich.

Eine mögliche Anwendung eines erfindungsgemäßen Laufrades 1 wird als Beispiel in Fig. 6 schematisch gezeigt. Von einem Riemen 29 ist ein Rad 30 angetrieben. Durch eine reibschlüssige Verbindung mit dem Rad 30 oder dem über ihn laufenden Riemen 29 ist ein Übertragungsrad 31 angetrieben, welches wiederum reibschlüssig das Laufrad 1 antreibt. Das Laufrad 1 kann über die Welle 23 beispielsweise als Antrieb für eine Wasserpumpe eines Verbrennungsmotors, insbesondere für ein Kraftfahrzeug dienen. Mittels eines Stellgliedes 32 kann das Übertragungsrad 31 vom Rad 30 bzw. dem über das Rad 30 laufenden Riemen 29 und/oder vom Laufrad 1 abgehoben werden, um die Verbindung zu unterbrechen. Beim riemengetriebenen Rad 30 kann es sich beispielsweise um ein Antriebsrad für eine Lichtmaschine oder ein Kompressor einer Klimaanlage oder ein anderes Nebenantriebsrad für einen Verbrennungsmotor handeln. Das Rad 30 kann auch direkt vom Verbrennungsmotor angetrieben sein und über den Riemen 20 ein oder mehrere Antriebsräder von Nebenantrieben antreiben.

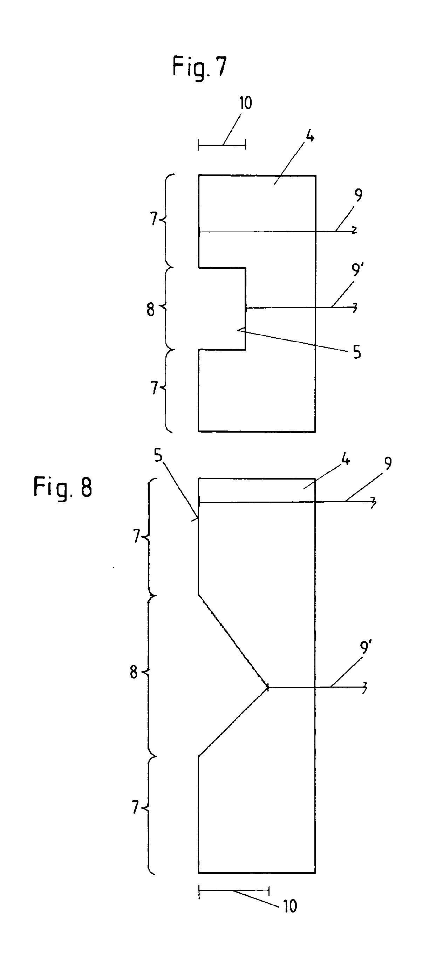

Die Fig. 7 und 8 zeigen noch alternative Ausgestaltungsformen der Reiboberfläche 5. Dargestellt ist jeweils nur ein Querschnitt durch den jeweiligen Reibbelag 4. Es wird im Folgenden im Wesentlichen nur auf die Unterschiede zum ersten Ausführungsbeispiel eingegangen. Alle anderen Merkmale des Laufrades bzw. Reibbelages 4 können wie oben, insbesondere zum ersten Ausführungsbeispiel, dargelegt, realisiert werden.

In beiden Varianten der Fig. 7 und 8 ist der Übergang vom zentralen Bereich 8 zu den Randbereichen 7 bereichsweise in Form von Kanten bzw. Stufen ausgebildet. In Fig. 7 ergibt sich daraus eine kanalartige Ausnehmung mit einem rechteckförmigen Querschnitt. Bei der Variante gemäß Fig. 8 ist eine zentrale Ausnehmung mit einem v-förmigen Querschnitt realisiert. All das sind natürlich nur Beispiele. In beiden Fällen sind die Ausnehmungen aber überhöht dargestellt. Für die Abstandsdifferenz 10 gilt günstigerweise auch bei diesen Ausgestaltungsformen das oben Gesagte.

### Legende zu den Hinweisziffern:

- 1: Laufrad
- 2: Rotationsachse
- 3: Tragkörper
- 4: Reibbelag
- 5: Reiboberfläche
- 6: axiale Richtung
- 7: Randbereich
- 8: zentraler Bereich
- 9, 9': Abstand
- 10: Abstandsdifferenz
- 11: Gesamterstreckung
- 12: radiale Richtung
- 13: Scheibenteil
- 14: Ringteil
- 15: Gesamterstreckung
- 16: Dicke
- 17: Zentralabschnitt
- 18: Symmetrieachse
- 19: Einsatzteil
- 20: Schrauböffnung
- 21: Verbindungsschraube
- 22: zentrale Öffnung
- 23: Welle
- 24: Bundsteg
- 25: Verbindungsflansch
- 26: Ebene
- 27: Anschlussbereich
- 28: Fortsatz
- 29: Riemen
- 30: Rad
- 31: Übertragungsrad
- 32: Stellglied
- 33: Fortsatz

## Patentansprüche

1. Laufrad (1) mit einem, um eine Rotationsachse (2) des Laufrades drehbaren Tragkörper (3) und einem, auf dem Tragkörper (3) angeordneten und gemeinsam mit dem Tragkörper (3) um die Rotationsachse (2) drehbaren Reibbelag (4), welcher zumindest bereichsweise von einer, zur reibschlüssigen Anlage an einem anderen Körper vorgesehenen, Reiboberfläche (5) begrenzt ist, **dadurch gekennzeichnet, dass** die Reiboberfläche (5), in axialer Richtung (6) parallel zur Rotationsachse (2) gesehen, zumindest zwei Randbereiche (7) und zumindest einen, zwischen den Randbereichen (7) angeordneten, zentralen Bereich (8) aufweist, wobei der Abstand (9, 9') zwischen Reiboberfläche (5) und Rotationsachse (2) im zentralen Bereich (8) geringer ist als in den Randbereichen (7).

2. Laufrad (1) nach Anspruch 1, **dadurch gekennzeichnet, dass** der Abstand (9, 9') zwischen Reiboberfläche (5) und Rotationsachse (2) im zentralen Bereich (8) um eine Abstandsdifferenz (10) von 0,1 mm bis 0,6mm, vorzugsweise von 0,2mm bis 0,4mm, geringer ist als in den Randbereichen (7).

3. Laufrad (1) nach Anspruch 1 oder 2, **dadurch gekennzeichnet, dass** der Übergang vom zentralen Bereich (8) zu den Randbereichen (7) stetig ist.

4. Laufrad (1) nach Anspruch 1 oder 2, **dadurch gekennzeichnet, dass** der Übergang vom zentralen Bereich (8) zu den Randbereichen (7) zumindest bereichsweise in Form zumindest einer Kante und/oder Stufe ausgebildet ist.

5. Laufrad (1) nach einem der Ansprüche 1 bis 4, **dadurch gekennzeichnet, dass** der zentrale Bereich (8), in axialer Richtung (6) parallel zur Rotationsachse (2) gesehen, sich über zumindest 20%, vorzugsweise über zumindest 50%, der Gesamterstreckung (11) der Reiboberfläche (5) erstreckt ist.

6. Laufrad (1) nach einem der Ansprüche 1 bis 5, **dadurch gekennzeichnet, dass** der Tragkörper (3), vorzugsweise faserverstärkten, Kunststoff, vorzugsweise Polyamid, aufweist oder aus, vorzugsweise faserverstärktem, Kunststoff, vorzugsweise Polyamid, besteht.

7. Laufrad (1) nach einem der Ansprüche 1 bis 6, **dadurch gekennzeichnet, dass** der Reibbelag (4) Kunststoff, vorzugsweise thermoplastisches Polyurethan, aufweist oder aus Kunststoff, vorzugsweise thermoplastischem Polyurethan, besteht.

8. Laufrad (1) nach einem der Ansprüche 1 bis 7, **dadurch gekennzeichnet, dass** der Reibbelag (4) zumindest an seiner Reiboberfläche (5), vorzugsweise der gesamte Reibbelag (4), eine Härte im Bereich von 90 Shore A bis 64 Shore D, vorzugsweise im Bereich von 50 Shore D bis 60 Shore D, aufweist.

9. Laufrad (1) nach einem der Ansprüche 1 bis 8, **dadurch gekennzeichnet, dass** die Reiboberfläche (5), vorzugsweise der gesamte Reibbelag (4), aus einem weicheren Material besteht als der Tragkörper (3).

10. Laufrad (1) nach einem der Ansprüche 1 bis 9, **dadurch gekennzeichnet, dass** die, vorzugsweise gesamte, Reiboberfläche (5), in radialer Richtung (12) von der Rotationsachse (2) aus gesehen, nach außen und vom Tragkörper (3) weg weist.

11. Laufrad (1) nach einem der Ansprüche 1 bis 10, **dadurch gekennzeichnet, dass** der Tragkörper (3) einen Scheibenteil (13) und einen, vorzugsweise zylinderförmigen, Ringteil (14) aufweist, wobei der Reibbelag (4) zumindest teilweise, in radialer Richtung (12) von der Rotationsachse (2) aus gesehen, außen auf dem Ringteil (14) angeordnet ist und der Scheibenteil (13), in radialer Richtung (12) von der Rotationsachse (2) aus gesehen, innen in einem vom Ringteil (14) umfassten Raum angeordnet ist.

12. Laufrad (1) nach Anspruch 11, **dadurch gekennzeichnet, dass** der Scheibenteil (13) und der Ringteil (14) einstückig miteinander verbunden sind.

13. Laufrad (1) nach Anspruch 11 oder 12, **dadurch gekennzeichnet, dass**, in axialer Richtung (6) parallel zur Rotationsachse (2) gesehen, die Gesamterstreckung (15) des Ringteils (14), vorzugsweise zumindest um das Doppelte oder um das Fünffache, größer ist, als die, in axialer Richtung (6) parallel zur Rotationsachse (2) gemessene, Dicke (16) des Scheibenteils (13) im Bereich der Verbindung des Scheibenteils (13) mit dem Ringteil (14).

14. Laufrad (1) nach einem der Ansprüche 11 bis 13, **dadurch gekennzeichnet, dass** der Scheibenteil (13), in axialer Richtung (6) parallel zur Rotationsachse (2) gesehen, in einem Zentralabschnitt (17) des Ringteils (14) mit dem Ringteil (14) verbunden ist, wobei der Zentralabschnitt (17) sich, in axialer Richtung (6) parallel zur Rotationsachse (2) gesehen, über bis zu 60%, vorzugsweise über bis zu 30%, der Gesamterstreckung (15) des Ringteils (14), in axialer Richtung (6) parallel zur Rotationsachse (2) gesehen, erstreckt.

15. Laufrad (1) nach einem der Ansprüche 1 bis 14, **dadurch gekennzeichnet, dass** die Reiboberfläche (5) achsensymmetrisch bezüglich einer orthogonal auf der Rotationsachse (2) stehenden Symmetrieachse (18) ausgebildet ist.
